# EUROPEAN PATENT APPLICATION

(11) **EP 1 063 272 A1**
(43) Date of publication of application: **27.12.2000**
(21) Application number: 99902872.3
(22) Date of filing: 10.02.1999
(51) Int. Cl.: C09K 5/04

(54) **REFRIGERANT COMPOSITION**

(30) Priority: 16.02.1998 JP 3251298
(71) Applicant: Daikin Industries, Ltd., Osaka-shi Osaka 530-8323 (JP)
(72) Inventor: Ide, Satoshi, Daikin Industries, Ltd., Settsu-shi, Osaka 566-0044 (JP); Tsuchiya, Tatsumi, Daikin Industries, Ltd., Settsu-shi, Osaka566-0044 (JP); Kitano, Keisuke, Daikin Industries, Ltd., Settsu-shi, Osaka 566-0044 (JP); Shibanuma, Takashi, Daikin Industries, Ltd., Settsu-shi, Osaka 566-0044 (JP)
(74) Representative: Luderschmidt, Schüler & Partner GbR
(86) International application number: JP9900569
(87) International publication number: WO9941324

(57) **Abstract**

The present invention provides a refrigerant composition which consists of (1) at least one component selected from the group consisting of difluoromethane and 1,1-difluoroethane and (2) at least one component selected from the group consisting of ethane, nitrous oxide, ammonia, and dimethyl ether. The composition has a low risk of the ozone layer depletion, little adverse effect on global warming, and a satisfactory coefficient of performance.

## Description

### TECHNICAL FIELD

The present invention relates to a refrigerant composition which is a working fluid for use in refrigerators.

### BACKGROUND ART

Chrolofluorohydrocarbons, fluorohydrocarbons, azeotropic compositions thereof and compositions having similar formulations to the azeotropic compositions, etc. have heretofore been known as refrigerants. Such refrigerants are generically called fluorocarbon or fluorocarbon-type refrigerants, among which dichlorodifluoromethane (hereinafter referred to as R-12), chlorodifluoromethane (hereinafter referred to as R-22) and the like are mainly in use at present. However, certain types of fluorocarbons were recently found to deplete the ozone layer of the stratosphere when released into the atmosphere and eventually exert seriously adverse effects on the ecosystem including humans on the earth.

Under the circumstances, a worldwide agreement on the restriction against use and production of the fluorocarbons highly potential for depleting the ozone layer has been issued. R-12, which is widely used as mentioned above, is one of the fluorocarbons under the restriction.

Further, the global warming has become a serious problem to be solved in addition to the ozone layer depletion and, therefore, a refrigerant which has a lowered global warming potential is in demand. For example, 1,1,1,2-tetrafluoroethane (HFC-134a), which has been used as an alternate fluorocarbon since it involves no risk of the ozone layer depletion, is now considered a greenhouse gas since it has a global warming potential (GWP) of 1300 when setting that of carbon dioxide as 1.

The widespread use of refrigerators and air conditioning equipment increases a demand for the fluorocarbons year by year. Therefore, the restriction on the use and production of the fluorocarbons is significantly influential in the present general social system including the habitat.

Thus, there is an instant need for developing a refrigerant having a reduced risk of the ozone layer depletion and little adverse effect on the global warming while being superior in refrigerating property, especially in coefficient of performance. Here, the coefficient of performance is given by a ratio of refrigerating capacity/work of compression. The refrigerating capacity denotes a quantity of heat that a substance to be cooled is deprived of in a unit time, and the work of compression denotes an amount of work achieved by power required for operating a refrigerator in a unit time. Accordingly, the coefficient of performance corresponds to the efficiency of a refrigerant.

Each of difuloromethan (HFC-32) and 1,1-difluoroethane (HFC-152a) is the compound which is free from chlorine and has a low risk of the ozone layer depletion, a relatively low global warming potential (GWP) and little adverse effect on the global warming. HFC-32 and HFC-152a each can be used solely, but not high in the coefficient of performance and, therefore, can hardly be counted among satisfactory refrigerants.

### DISCLOSURE OF INVENTION

A main object of the present invention is to provide a refrigerant composition having a reduced risk of the ozone layer depletion, little adverse effect on the global warming and a satisfactory coefficient of performance.

The inventors conducted an extensive research considering the above-mentioned problems and found that a refrigerant composition having substantially no risk of the ozone layer depletion when released into the stratosphere, a low global warming potential (GWP), a high coefficient of performance and an excellent refrigerating capacity can be produced by using at least one component selected from difluoromethane and 1,1-difluoroethane in combination with at least one component selected from ethane, nitrous oxide, ammonia and dimethyl ether, whereby to accomplish the present invention.

The invention provides the following refrigerant compositions.
(I) A refrigerant composition consisting of (1) at least one component selected from the group consisting of difluoromethane and 1,1-difluoroethane and (2) at least one component selected from the group consisting of ethane, nitrous oxide, ammonia and dimethyl ether.
(II) A refrigerant composition according to item (I), consisting of (1) 99-30 wt% of at least one component selected from the group consisting of difluoromethane and 1,1-difluoroethane and (2) 1-70 wt% of at least one component selected from the group consisting of ethane, nitrous oxide, ammonia and dimethyl ether.
(III) A refrigerant composition according to item (I), consisting of (1) 90-50 wt% of at least one component selected from the group consisting of difluoromethane and 1,1-difluoroethane and (2) 10-50 wt% of at least one component selected from the group consisting of ethane, nitrous oxide, ammonia and dimethyl ether.

Difluoromethane (HFC-32) and 1,1-difluoroethane (HFC-152a) to be used as fluorohydrocarbon compounds in the invention are free from chlorine and have substantially no risk of the ozone layer depletion. The global warming potentials of HFC-32 and HFC-152a respectively are 650 and 140 when that of carbon dioxide is taken as 1. Thus, they are the compounds having little adverse effect on the global warming.

Further, another component to be used in the present invention, which is selected from ethane, nitrous oxide, ammonia and dimethyl ether, is a compound having substantially no risk of the ozone layer depletion or a low risk of the ozone layer depletion and a low global warming potential. GWPs of the compounds are as follows.
Ethane: 11
Nitrous oxide: 310
Ammonia: <10
Dimethyl ether: <10

The composition of the invention is produced by combining the above fluorohydrocarbon compound(s) and the above component(s), and a mixture obtained therefrom is a refrigerant composition having substantially no risk of the ozone layer depletion, a low GWP and little adverse effect on the global warming.

The refrigerant composition of the invention preferably consists of 99-30 wt% of at least one component selected from the group consisting of difluoromethane and 1,1-difluoroethane and 1-70 wt% of at least one component selected from the group consisting of ethane, nitrous oxide, ammonia and dimethyl ether, more preferably 90-50 wt% of the former and 10-50 wt% of the latter.

By using a mixture of at least one fluorohydrocarbon compound selected from the group consisting of difluoromethane and 1,1-difluoroethane with other component(s) in the above mixing ratio, the coefficient of performance is increased compared with that observed in using difluoromethane or 1,1-difluoroethane solely.

Especially, according to the invention, in view of the effect of improving the coefficient of performance, the composition consisting of 99-30 wt% of difluoromethane and 1-70 wt% of at least one component selected from the group consisting of ammonia and dimethyl ether is preferred, and the composition consisting of 90-50 wt% of the former and 10-50 wt% of the latter is more preferred.

Moreover, the refrigerating capacity is greatly improved In the case where difluoromethane is used in combination with at least one component selected from the group consisting of ethane and nitrous oxide. To increase the coefficient of performance by employing the above combination, it is particularly preferable to use about 90-50 wt% of difluoromethane and about 10-50 wt% of at least one component selected from the group consisting of ethane and nitrous oxide.

The composition of the invention can take advantages of properties of a non-azeotropic composition. In general, evaporating temperature of a single compound and that of an azeotropic composition in an evaporator are constant when the evaporation is conducted under a constant pressure, while an evaporating temperature of a non-azeotropic composition is variable as being lowered at the inlet of an evaporator and increased at the outlet thereof. On the other hand, a fluid to be cooled flows so as to perform heat exchange in a counter-direction with respect to a flow direction of the refrigerant in the evaporator. Therefore, the temperature of the fluid to be cooled declines as it flows even though the evaporation temperature of the refrigerant is constant. That is, a temperature difference between the refrigerant and the fluid to be cooled is diminished as the fluid to be cooled flows forward. When using the refrigerant composition of the invention, the change in the evaporating temperature of the refrigerant composition effectively corresponds to the temperature decline of the fluid to be cooled in the evaporator, and thus the efficiency of refrigeration i.e. the coefficient of performance is improved.

As described above, the refrigerant composition of the invention has substantially no adverse effect on the ozone layer, a low global warming potential (GWP), a high coefficient of performance and an excellent refrigerant capacity.

### BEST MODE FOR CARRYING OUT THE INVENTION

The features of the invention are more clearly explained below with reference to Examples.

### Example 1

Ethane, nitrous oxide, ammonia or dimethyl ether (DME) is mixed with difluoromethane (HFC-32) in the mixing ratios shown In Table 1 to prepare refrigerants. The rest of the mixing ratio in Table 1 is for HFC-32.

Performance of the refrigerants prepared above were compared under the conditions that a temperature of refrigerant at the start of condensation in a condenser is 50°C, a temperature of refrigerant at the inlet of an evaporator is 0°C, supercooling in the evaporator is 0°C and overheating in the evaporator is 0°C. The refrigerating capacity (kJ/m³) and coefficient of performance are shown in Table 1.

**Table 1**

| Mixing Ratio (wt%) | | | | Refrigerating Capacity (kJ/m³) | Coefficient of Performance (cop) |
|---|---|---|---|---|---|
| Ethane | Ammonia | DME | N₂O | | |
| 0 | | | | 4990 | 4.02 |
| 20 | | | | 7700 | 4.09 |
| 37 | | | | 9600 | 4.10 |
| 57 | | | | 11400 | 3.98 |
| 70 | | | | 12300 | 3.90 |
| | 0 | | | 4990 | 4.02 |
| | 12 | | | 4700 | 4.58 |
| | 25 | | | 4500 | 4.70 |
| | 43 | | | 4100 | 4.66 |
| | 50 | | | 4000 | 4.64 |
| | | 0 | | 4990 | 4.02 |
| | | 27 | | 4200 | 4.32 |
| | | 46 | | 3700 | 4.40 |
| | | 66 | | 3100 | 4.38 |
| | | | 0 | 4990 | 4.02 |
| | | | 27 | 6900 | 4.04 |
| | | | 46 | 8200 | 4.05 |
| | | | 66 | 9400 | 3.95 |

The above results reveal excellent refrigerant properties of the refrigerant compositions of the invention.

### Example 2

Ammonia or dimethyl ether (DME) is mixed with 1,1-difluoroethan (HFC-152a) in the mixing ratios shown in Table 2 to prepare refrigerants. The rest of the mixing ratio in Table 2 is for HFC-152a.

Performance of the refrigerants prepared above were compared in the same manner as in Example 1. The results are shown in Table 2.

**Table 2**

| Mixing Ratio (wt%) | | Refrigerating Capacity(kJ/m³) | Coefficient of Performance(cop) |
|---|---|---|---|
| Ammonia | DME | | |
| 0 | | 1840 | 4.39 |
| 10 | | 2600 | 4.63 |
| 20 | | 3000 | 4.64 |
| 40 | | 3200 | 4.62 |
| | 0 | 1840 | 4.39 |
| | 23 | 2050 | 4.46 |
| | 41 | 2200 | 4.43 |
| | 62 | 2250 | 4.38 |

The above results reveals excellent refrigerant properties of the refrigerant compositions of the invention.

## Claims

1. A refrigerant composition consisting of (1) at least one component selected from the group consisting of difluoromethane and 1,1-difluoroethane and (2) at least one component selected from the group consisting of ethane, nitrous oxide, ammonia and dimethyl ether.

2. A refrigerant composition according to claim 1, consisting of (1) 99-30 wt% of at least one component selected from the group consisting of difluoromethane and 1,1-difluoroethane and (2) 1-70 wt% of at least one component selected from the group consisting of ethane, nitrous oxide, ammonia and dimethyl ether.

3. A refrigerant composition according to claim 1, consisting of (1) 90-50 wt% of at least one component selected from the group consisting of difluoromethane and 1,1-difluoroethane and (2) 10-50 wt% of at least one component selected from the group consisting of ethane, nitrous oxide, ammonia and dimethyl ether.
